Europäisches Patentamt

European Patent Office

Office européen des brevets

(11) Veröffentlichungsnummer : **0 045 856**
**B1**

(12)

# EUROPÄISCHE PATENTSCHRIFT

(45) Veröffentlichungstag der Patentschrift :
11.04.84

(51) Int. Cl.³ : **B 23 K   9/02**

(21) Anmeldenummer : **81105418.8**

(22) Anmeldetag : **11.07.81**

---

(54) **Schweißvorrichtung zur Herstellung hohlzylindrischer Körper.**

---

(30) Priorität : **06.08.80 DE 3029686**

(43) Veröffentlichungstag der Anmeldung :
**17.02.82 Patentblatt 82/07**

(45) Bekanntmachung des Hinweises auf die Patenterteilung : **11.04.84 Patentblatt 84/15**

(84) Benannte Vertragsstaaten :
**DE FR GB IT SE**

(56) Entgegenhaltungen :
**DE-A- 2 153 025**
**FR-A- 1 155 247**
**FR-A- 2 098 828**
**GB-A-   682 222**
**US-A- 2 062 460**
**US-A- 2 194 101**
**US-A- 4 103 138**

(73) Patentinhaber : **Thyssen Aktiengesellschaft vorm.**
**August Thyssen-Hütte**
**D-4100 Duisburg (DE)**

(72) Erfinder : **Fernandez, Jose**
**Holtknebel 24**
**D-2000 Hamburg 92 (DE)**
Erfinder : **Herm, Jürgen**
**Hammerichstrasse 1**
**D-2000 Hamburg 52 (DE)**
Erfinder : **Krakow, Heinz**
**Paul-Roosen-Strasse 47**
**D-2000 Hamburg 50 (DE)**
Erfinder : **Tomsen, Harald**
**Bahrenfelder Chaussee 52**
**D-2000 Hamburg 50 (DE)**
Erfinder : **Wortmann, Ernst**
**Böckelweg 38**
**D-2000 Hamburg 63 (DE)**

(74) Vertreter : **Patentanwaltsbüro Cohausz & Florack**
**Postfach 14 01 47**
**D-4000 Düsseldorf 1 (DE)**

Schweißvorrichtung zur Herstellung hohlzylindrischer Körper

Die Erfindung betrifft eine Schweißvorrichtung zur Herstellung hohlzylindrischer Körper durch Auftragsschweißen auf einen hohlzylindrischen Grundkörper, bestehend aus mindestens einem drehbar gelagerten Stützkörper, wobei der Grundkörper konzentrisch mittels am Umfang verteilter radialer Abstandshalter auf dem Stützkörper abgestützt ist. Eine derartige Vorrichtung ist z. B. bekannt aus DE-A-2 850 721.

Bei dieser bekannten Vorrichtung mit z. B. durch Spindeln verstellbarer Verbindung zwischen Stützkörper und Grundkörper ist eine Anpassung an unterschiedliche Durchmesser des Grundkörpers möglich.

Der Erfindung liegt nun die Aufgabe zugrunde, eine gleichmäßige Aufnahme der Schrumpfspannungen zu erzielen, die beim Herstellen großer schwerer Körper durch Lichtbogen-Auftragsschweißen auftreten, damit die Geometrie des Grundkörpers erhalten bleibt, d. h. keine Veränderungen der Kreisform und keine Durchmesserveränderungen über die Länge des Grundkörpers auftritt. Die Verbindung zwischen Stütz- und Grundkörper soll also derart gestaltet werden, daß durch die beim Auftragsschweißen entstehenden Schrumpfspannungen keine Einbeulungen oder Durchbiegungen des Grundkörpers auftreten.

Zur Lösung dieser Aufgabe wird bei einer Schweißvorrichtung der eingangs genannten Art erfindungsgemäß vorgeschlagen, daß der Stützkörper als ein an beiden Enden drehbar gelagertes Rohr ausgebildet ist und die Abstandshalter elastisch nachgiebig sind.

Bei der erfindungsgemäßen Schweißvorrichtung ist gewährleistet, daß die aus dem Schrumpfungsprozeß beim Auftragsschweißen auf den Grundkörper resultierenden Axial- und Radialkräfte die Form des Grundkörpers nicht verändern, weil die elastisch nachgiebigen Abstandshalter auf dem an beiden Enden axial unverrückbar gelagerten Stützkörper diese Kräfte durch Formänderung auffangen können.

In weiterer Ausgestaltung der Erfindung bestehen die Abstandshalter aus U-förmigen Federelementen mit parallel zur Achse des Grundkörpers verlaufenden U-Schenkeln und sind in dem Ringraum zwischen Stützkörper und Grundkörper in einem in Umfangs- und Achsrichtung wählbaren Abstand voneinander eingesetzt und festgelegt. Derartige Abstandshalter aus Flach- oder Rundstahl sind gegenüber den bekannten Abstandsmitteln kostengünstiger.

Ferner können die U-förmigen Federelemente, mit dem offenen Enden ihrer U-Schenkel abwechselnd zum Ende bzw. zur Mitte des Stützkörpers angeordnet sein. Durch die so versetzte Anordnung der Federelemente wird der Grundkörper auf einem relativ breiten Bereich gleichmäßig abgestützt. Die Federelemente werden an beiden Enden des Grundkörpers angebracht. Bei sehr langen Behältern können sie auch ein oder mehrere Male im Innern des Grundkörpers angeordnet werden.

Die Erfindung wird nachstehend anhand des in der Zeichnung dargestellten Ausführungsbeispiels beschrieben. Es zeigen

Figur 1 einen Endabschnitt der Vorrichtung in teilweisem Schnitt und

Figur 2 die Hälfte eines Schnittes längs der Linie A-B aus Fig. 1.

Auf dem hohlzylindrischen Stützkörper 1 sind in Umfangsrichtung abstandsweise U-förmige Federelemente 2 mit einem ihrer Schenkel 4 aufgesetzt und z. B. durch Punktschweißen angeheftet. Mit dem anderen Schenkel 4 stehen die U-förmigen Federelemente 2 mit der Innenumfangsfläche des hohlzylindrischen Grundkörpers 3 in Berührung und können auch an ihm angeschweißt sein. Die in Umfangsrichtung im Abstand x und in Axialrichtung um das Maß y versetzt angeordneten U-förmigen Federelemente 2 überbrücken auf diese Weise den Ringraum 5 zwischen Stützkörper 1 und Grundkörper 3.

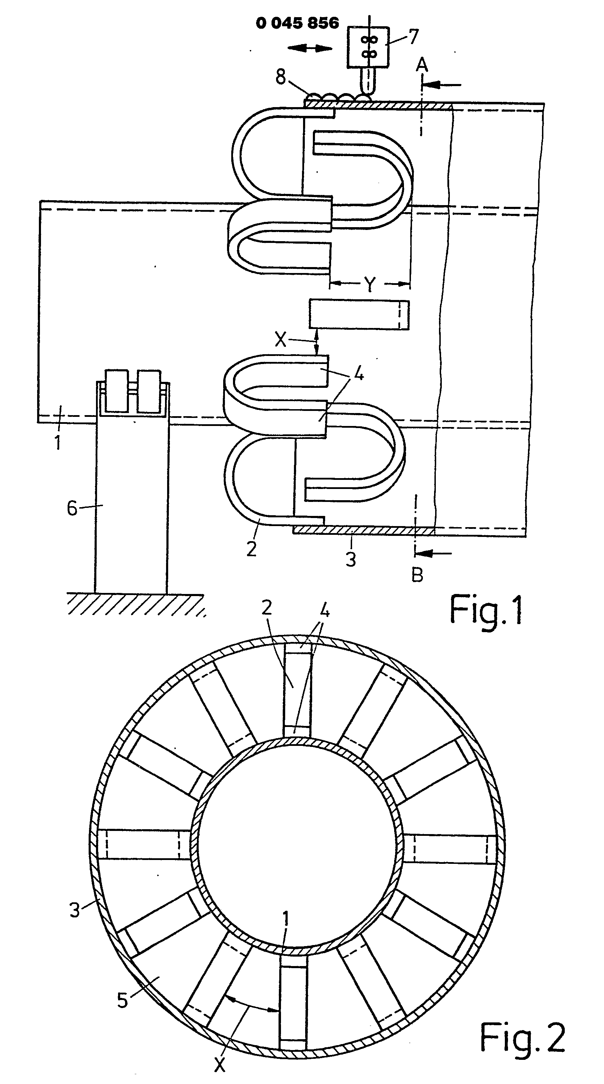

Wie insbesondere Fig. 1 zeigt, weisen die U-förmigen Federelemente 2 mit ihrer Öffnung zwischen den Schenkeln 4 abwechselnd zum Ende bzw. zur Mitte des Stützkörpers 1, wodurch sich eine größere Formsteifigkeit der Verbindung ergibt.

An beiden Enden ist der Stützkörper 1 in dem Lager, z. B. einem Stützrollenlager, drehbar gelagert, um ihn gemeinsam mit dem von ihm über die Federelemente 2 getragenen Grundkörper 3 während des Auftragsschweißens mittels einer in Fig. 1 schematisch angedeuteten Schweißvorrichtung 7 in Umdrehung zu versetzen, wobei nach und nach lagenweise Schweißmaterial 8 auf den Grundkörper 3 unter Anwachsen seiner Wandstärke aufgetragen wird, bis die gewünschte Wandstärke erreicht ist.

## Ansprüche

1. Schweißvorrichtung zur Herstellung hohlzylindrischer Körper durch Auftragsschweißen auf einen hohlzylindrischen Grundkörper (3), bestehend aus mindestens einem drehbar gelagerten Stützkörper (1), wobei der Grundkörper (3) konzentrisch mittels am Umfang verteilter radialer Abstandshalter (2) auf dem Stützkörper (1) abgestützt ist, dadurch gekennzeichnet, daß der Stützkörper (1) als ein an beiden Enden drehbar gelagertes Rohr ausgebildet ist und die Abstandshalter (2) elastisch nachgiebig sind.

2. Schweißvorrichtung nach Anspruch 1, dadurch gekennzeichnet, daß die Abstandshalter aus U-förmigen Federelementen (2) mit parallel zur Achse des Grundkörpers (3) verlaufenden U-Schenkeln (4) bestehen und in dem Ringraum (5) zwischen Stützkörper (1) und Grundkörper (3) in einem in Umfangs- und Achsrichtung wählbaren Abstand (6 bzs. 8) voneinander eingesetzt und festgelegt sind.

3. Schweißvorrichtung nach Anspruch 2, dadurch gekennzeichnet, daß die U-förmigen Federelemente (2), mit dem offenen Ende ihrer U-Schenkel (4) abwechselnd zur Mitte bzw. zum Ende des Stützkörpers (1) weisend, angeordnet sind.

4. Schweißvorrichtung nach Anspruch 2 oder 3, dadurch gekennzeichnet, daß die U-förmigen Federelemente (2) am Stützkörper (1) und Grundkörper (3) durch Punktschweißen angeheftet sind.

## Claims

1. Welding apparatus for the production of hollow cylindrical parts by build-up welding on a hollow cylindrical base part (3), comprising at least one rotatably mounted supporting part (1), wherein the base part (3) is supported on the supporting part (1) concentrically by means of peripherally distributed radial spacer elements (2), characterised in that the supporting part (1) is constructed as a tube rotatably mounted at both ends, and the spacer elements (2) are elastically yieldable.

2. Welding apparatus according to claim 1, characterised in that the spacer elements comprise U-shaped spring elements (2) with U legs (4) disposed parallel to the axis of the base part (3), and are inserted into and secured in the annular space (5) between the supporting part (1) and the base part (3) at a spacing (6 and 8 respectively) selectable as appropriate in the peripheral and axial directions.

3. Welding apparatus according to claim 2, characterised in that the U-shaped spring elements (2) are arranged with the open end of their U legs (4) directed alternately towards the middle and the end respectively of the supporting part (1).

4. Welding apparatus according to claim 2 or 3, characterised in that the U-shaped spring elements (2) are tacked on to the supporting part (1) and base part (3) by spot welding.

## Revendications

1. Appareil de soudage pour la fabrication de corps creux cylindriques par soudure à superposition sur un corps de base (3) creux cylindrique, constitué d'au moins un corps d'appui (1) monté pivotant, le corps de base (3) étant en appui concentriquement sur le corps d'appui (1) au moyen d'entretoises radiales (2) réparties à la périphérie, caractérisé par le fait que le corps d'appui (1) est formé par un tube monté pivotant à ses deux extrémités et les entretoises (2) sont déformables élastiquement.

2. Appareil de soudage selon la revendication 1, caractérisé par le fait que les entretoises sont constituées d'éléments de ressort (2) en forme de U avec les branches du U (4) s'étendant parallèlement à l'axe du corps de base (3) et sont logées et fixées dans l'espace annulaire (5) entre le corps d'appui (1) et le corps de base (3) à une distance (6-8) réglable en direction périphérique et axiale.

3. Appareil de soudage selon la revendication 2, caractérisé par le fait que les éléments de ressort (2) en forme de U sont disposés avec l'extrémité ouverte de leurs branches du U (4) tournée alternativement vers le milieu ou l'extrémité du corps d'appui (1).

4. Appareil de soudage selon l'une des revendications 2 ou 3, caractérisé par le fait que les éléments de ressort (2) en forme de U sont fixés au corps d'appui (1) au corps de base (3) par des soudures par joint.

Fig.1

Fig.2